Europäisches Patentamt

(19) European Patent Office

Office européen des brevets

(11) Publication number: **0 120 662**
**A1**

## (12) EUROPEAN PATENT APPLICATION

(21) Application number: **84301841.7**

(22) Date of filing: **19.03.84**

(51) Int. Cl.³: **B 64 G 1/44**

(30) Priority: **19.03.83 GB 8307669**

(43) Date of publication of application:
**03.10.84 Bulletin 84/40**

(84) Designated Contracting States:
**DE FR GB IT**

(71) Applicant: **BRITISH AEROSPACE PUBLIC LIMITED
COMPANY
100 Pall Mall
London SW1Y 5HR(GB)**

(72) Inventor: **Young, Ronald William British Aerospace
P.L.C.
Space & Communications Division Argyle Way
Stevenage Hertfordshire SG1 2AS(GB)**

(74) Representative: **Saul, David Jonathan et al,
British Aerospace plc Corporate Patents Dept.
Brooklands Road
Weybridge Surrey KT13 0SJ(GB)**

(54) Spacecraft.

(57) A satellite 10 having an axis (Z – Z) about which it is spun
for stabilisation purposes at least during insertion into orbit
but which has a tendency to become less stable during such
insertion, includes a body, at least one solar array (11) carried
by the body movable from a stowed position close to the body
to a fully extended position when inserted into orbit to provide
electrical power, said solar array being adapted to be partially
extended during insertion into orbit whereby the tendency to
become less stable is at least reduced.

Fig. 3.

EP 0 120 662 A1

SPACECRAFT

This invention relates to spacecraft having solar array assemblies which can be moved from a stowed position in which they lie closely adjacent the spacecraft body, through one or more intermediate positions in which the array assemblies are partially extended, to a fully extended position.  The solar array assemblies include photo-voltaic cells which when exposed to sunlight provide power for the spacecraft.

During flight, the mass properties of spacecraft (which properties include the mass distribution) may change, due to fuel usage for example, such that the position of the principal axis of inertia may alter significantly. Where a spacecraft is spin stabilised, the movement of the position of this axis is disadvantageous since in general it is preferred that the required spin axis is coincident with the principal axis of inertia.  It is well known that a spinning body will tend to spin about its principal axis of inertia since this is a minimum energy state, and whilst it is possible to force the body to spin about some other axis, there is significant advantage in ensuring that the required spin axis is coincident with the principal axis of inertia.

Thus, where the mass properties of a spinning spacecraft change such that the desired spin axis no longer coincides with the principal axis of inertia and/or the ratio of the inertia about the principal axis to that about axes transverse to the principal axis is reduced to undesirable level, then spin stability of the spacecraft is adversely affected.

It is an object of the present invention to change the spacecraft's mass properties in such a manner as to at least reduce spin instability.

According to one aspect of the present invention in a spin stabilised spacecraft having a body and a solar array assembly carried thereon, the solar array assembly is adapted to be partially extended whereby the mass properties of the spacecraft can be changed.

By this arrangement any instabilities, due to for example fuel usage, can be at least reduced.

Furthermore, since in the stowed condition of the solar array assemblies only a limited area of photo-voltaic cells, or none at all, are exposed with a nil or only limited power output, the partial extension thereof can supply extra power if and when needed.

This and further aspects of the invention are described by way of example with reference to a spacecraft suitable for operation in a geosynchronous orbit and which is adapted to be transferred from a parking orbit to the geosynchronous orbit via an intermediate transfer orbit.

In the accompanying exemplary drawings:-

Figure 1 illustrates a typical injection sequence for a spacecraft,

Figure 2 illustrates a spacecraft with its solar panel assemblies stowed,

Figure 3 illustrates a similar spacecraft but with solar panel assemblies partially extended,

Figures 4a and 4b are diagrams of one embodiment of a spacecraft with solar panel assemblies respectively stowed and partially extended,

Figures 5a and 5b are similar views to those of Figures 4a and 4b but of an alternative embodiment, and

Figures 6a and 6b are similar views of yet a further embodiment.

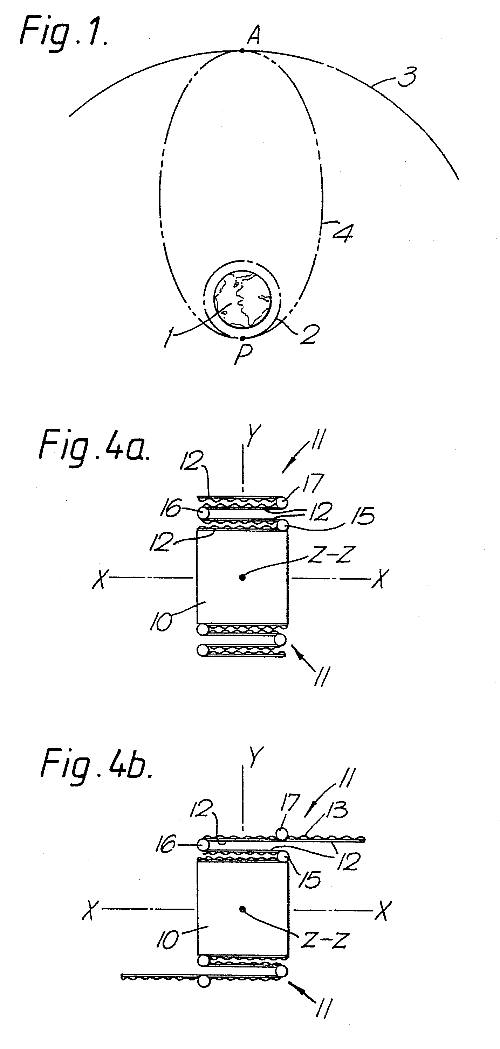

Referring initially to Figure 1, a satellite, not shown, is launched from the earth 1 into a parking orbit 2 typically at some 300 Km altitude for launches employing a space shuttle type vehicle. The desired geosynchronous orbit to be attained by the satellite is shown in part at 3 whilst an elliptical intermediate transfer orbit is shown at 4, its perigee P being on the parking orbit 2 and its apogee A being on or near the geosynchronous orbit 3.

For a launch using a space shuttle vehicle, the satellite is mounted on a perigee motor stage such as the Payload Assist Module (PAM-D) of McDonnell Douglas Corporation, the space shuttle vehicle and its payload being placed in the parking orbit 2. The satellite/PAM assembly is aligned to the required injection direction and spun up to give directional stability and is then deployed from the orbiting shuttle vehicle. The PAM motor is then fired at an appropriate time such that satellite/PAM assembly is placed in the transfer orbit 4. The satellite is subsequently separated from the expended PAM; it does however retain a significant rate of spin, typically 30 to 80 RPM.

Injection into the geosynchromous orbit 3 follows. For this purpose, the satellite carries a rocket motor which, when fired at apogee A, causes the satellite to enter the desired geosynchronous orbit. Because the mass of fuel required for the apogee injection burn is some 40% to 50% of the satellite mass before apogee burn, the satellite mass properties, and in particular the position of the principal axis of inertia, changes significantly as fuel is used.

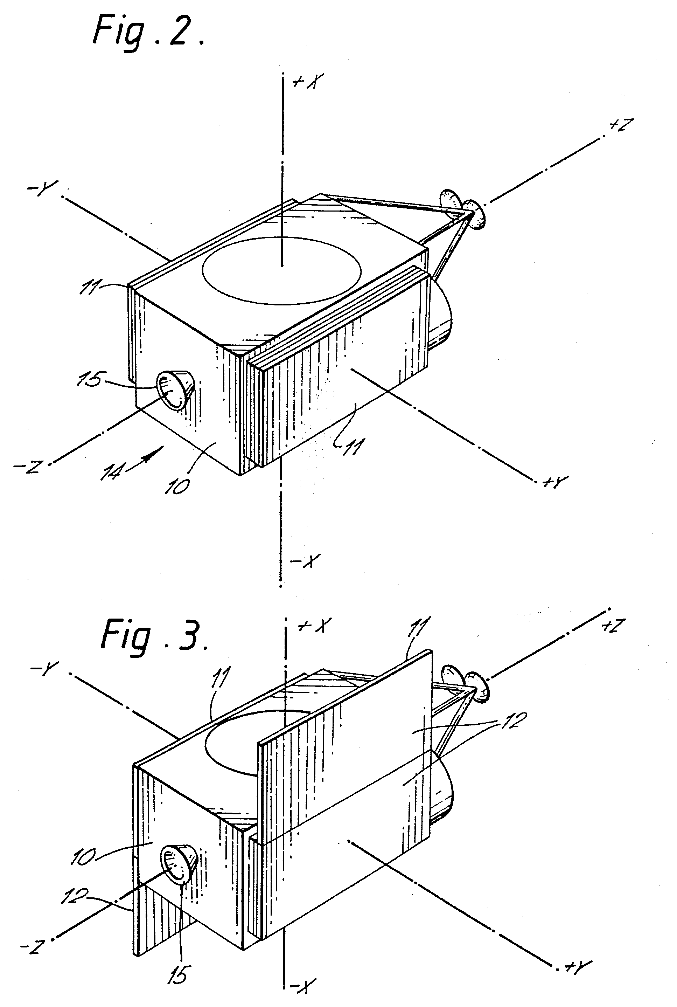

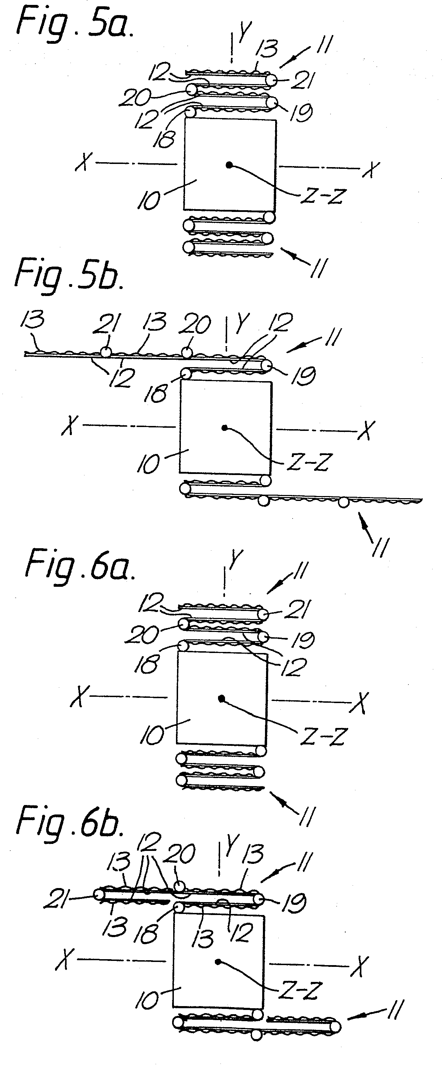

Referring now to Figures 2 to 6, a satellite 10 has a spin axis Z - Z and axes orthogonal to the spin axis X - X and Y - Y. The faces + Y and - Y of the satellite lie transverse to the Y - Y axis and each carry an identical solar array assembly 11. Each comprises a series of individual panels 12 on one face of which, 13, lie the sensitive faces of an array of photovoltaic cells. The face 13 is shown with wavy lines in Figures 4 to 6. In the transfer orbit, these assemblies 11 are typically stowed in stacked face-to-face relationship as illustrated in Figure 2, but in certain circumstances they

- 5 -

may be extended.  If the outermost panel of the stowed array has its face 13 directed outboard, then this panel can supply power.  Conversely if it has its face 13 directed inboard, then no power can be developed.

Those faces + X, - X and + Z, - Z which respectively lie transverse to the X - X and Z - Z axes carry antennas 14 (with the exception of - Z)     which are deployed to perform the required payload mission of the satellite. That face - Z carries a rocket motor outlet 15 being that providing the apogee thrust for geosynchronous orbit injection.

Where spin instabilities occur, for example, although not exclusively, as a result of the apogee motor burn, then to counter such instabilities it is envisaged that the solar array assemblies 11 be partially extended. Such a partial extension is illustrated in Figure 3, where an individual panel 12 of each array is extended from the stack to lie in edge-to-edge relationship, generally co-planar with the outermost panel 12 remaining in the stack.  As can be seen, the extended panels of each stack extend oppositely parallel to one another, each in a plane tangential to a notional cylinder generated upon the spin axis Z - Z.

Ways of stacking and interconnecting the individual panels 12 to allow such partial extension are illustrated in Figures 4 to 6.

In Figures 4a and 4b, an array of four individual panels 12 is arranged as follows. One panel 12 is mounted on the satellite body with its surface 13 facing outboard. A second panel is hinged at one edge 15 so that it can lie with its surface 13 facing surface 13 of the first panel when stowed. A third panel is hinged to the second panel at an edge 16 remote from the edge 15 so that it can lie back-to-back with the second panel when stowed. Finally, a fourth panel is hinged to the third panel at an edge 17 remote from the edge 16, so that it can lie face-to-face with the third panel when stowed. No power is generated by this configuration in the stowed position.

When partially extended, the fourth panel is swung outwards through 180$^{\circ}$ about the hinge 17 to lie in co-planar edge-to-edge relationship with the third panel. The surfaces 13 of both the third and fourth panels are exposed to allow power to be generated.

In Figures 5a and 5b a further way of stacking and interconnecting the panels is shown. This is the inverse of that of Figures 4 in that the surface 13 of the first panel 12 is directed inboard leading to the surface 13 of the fourth panel of the stack being directed outboard. Thus, the first panel is hinged at one edge 18 to the satellite body, a second panel is hinged at an edge 19 remote from the edge 18 to the first panel, so that its surface 13 is directed outboard and the panels lie back-to-back when stowed. A third panel is hinged to the second panel at an edge 20 remote from the edge 19 so that its surface 13 lies face-to-face with surface 13 of the second panel when stowed. Finally, a fourth panel is hinged to the third panel at an edge 21 remote from the edge 20 so that its surface 13 is directed outboard.

When partially extended, the third panel has moved through 180$^{\circ}$ about the hinge at 20, the fourth panel has moved through 180$^{\circ}$ about the hinge at 21 such that the fourth, third, and second panels lie in co-planar edge-to-edge relationship. All three panels can thus generate power.

In Figures 6a and 6b yet a further way of stacking and interconnecting the individual panels is shown. This is a variation on that of Figures 5a and 5b in that when stacked the layout of the individual panels is the same but when partially extended, the first, second and third panels lie in similar manner to that illustrated in Figures 5a and 5b, but the fourth panel remains lying back-to-back with the third panel. Thus only a 180$^{\circ}$ movement about that hinge at edge 20 is required.

Although the panels are shown lying generally co-planar with one another when the arrays are partially extended, i.e. 180$^{\circ}$ movements are envisaged, other movements through more or less than 180$^{\circ}$ are possible.

CLAIMS:

1.    A satellite (10) having an axis (Z - Z) about which it is spun for stabilisation purposes at least during insertion into orbit but which has a tendency to instability during such insertion, includes body means, solar array means (11) carried by the body movable from a stowed position (Figures 2, 4(a), 5(a) and 6(a)) close to the body to a fully extended position, said solar array means (11) being adapted to be partially extended (Figures 3, 4(b), 5(b), and 6(b)) during insertion into orbit whereby the tendency to instability is at least reduced.

2.    A satellite according to Claim 1, wherein the solar array means (11) comprises two panel assemblies symmetrically disposed, one to each side of the spin axis (Z - Z).

3.    A satellite according to Claim 2, wherein each panel assembly includes a plurality of solar panels (12) arranged in the stowed position to lie one on top of the other in stacked relationship, and in the extended position to lie in generally edge-to-edge relationship, but wherein in the partially extended position at least one panel is displaced from the stack whilst the remaining panels remain in the stacked relationship.

4.    A satellite according to Claim 3, wherein each panel (2) has two parallel spaced edge regions (15, 16, 17, etc), hinge means connecting an edge region of one panel to an edge region of a next adjacent panel, hinge means connecting the further edge region of said next adjacent panel to an edge region of yet a further next adjacent panel, and so on.

5. A satellite according to Claim 4, wherein each hinge means is capable of allowing relative angular movement of $180^{\circ}$ between connected panels (11).

6. In a satellite (10) having an axis (Z - Z) about which it is spun for stabilisation purposes but which has a tendency to become less stable as fuel is used, body means and solar array means (11) carried by the body and movable from a stowed position (Figures 2, 4(a), 5(a), and 6(a))close to the body to a fully extended position, the method of partially extending the solar array means (Figures 3, 4(b), 5(b), and 6(b))as fuel is used whereby the tendency to become less stable is at least reduced.

## Fig.1.

A

3

4

1

P

2

## Fig.4a.

Y

11

12

17

16

12

15

12

X ——— Z-Z ——— X

10

11

## Fig.4b.

Y

11

12

17

13

16

12

15

X ——— X

10

Z-Z

11

0120662

Fig.2.

Fig.3.

Fig.5a.

Fig.5b.

Fig.6a.

Fig.6b.

0120662

**European Patent Office**

**EUROPEAN SEARCH REPORT**

EP 84 30 1841

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | EP-A-0 064 917 (AEROSPATIALE)<br><br>* Page 6 *<br><br>----- | 1,2,3,<br>4,5,6 | B 64 G 1/44 |
| | | | **TECHNICAL FIELDS SEARCHED (Int. Cl. 3)**<br><br>B 64 G |

The present search report has been drawn up for all claims

| Place of search<br>THE HAGUE | Date of completion of the search<br>14-06-1984 | Examiner<br>HAUGLUSTAINE H.P.M. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82